# EUROPÄISCHE PATENTSCHRIFT

(11) **EP 2 193 411 B1**
(45) Veröffentlichungstag und Bekanntmachung des Hinweises auf die Patenterteilung: **03.08.2016**
(21) Anmeldenummer: 08787135.6
(22) Anmeldetag: 12.08.2008
(51) Int. Cl.: G05B 19/418

(54) **VERFAHREN ZUM BETREIBEN EINES FELDGERÄTES IN EINEM LEISTUNGSANGEPASSTEN MODUS**
METHOD FOR OPERATION OF A FIELD DEVICE IN A MATCHED-POWER MODE
PROCÉDÉ DE FONCTIONNEMENT D'UN APPAREIL DE TERRAIN DANS UN MODE ADAPTÉ EN PUISSANCE

(30) Priorität: 25.09.2007 DE 102007045884
(43) Veröffentlichungstag der Anmeldung: 09.06.2010
(73) Patentinhaber: Endress + Hauser Process Solutions AG, 4153 Reinach (CH)
(72) Erfinder: SEILER, Christian, 79424 Auggen (DE)
(74) Vertreter: Andres, Angelika Maria
(86) Internationale Anmeldenummer: PCT/EP2008/060577
(87) Internationale Veröffentlichungsnummer: WO 2009/040191

(56) Entgegenhaltungen:
- WO-A-2005/040735
- WO-A-2005/116787
- US-A1- 2004 078 117

## Beschreibung

Die vorliegende Erfindung betrifft ein Verfahren zum Betreiben eines Feldgerätes der Prozessautomatisierungstechnik gemäß dem Oberbegriff des Anspruchs 1 sowie ein Feldgerät der Prozessautomatisierungstechnik für ein Funksystem gemäß dem Oberbegriff des Anspruchs 11.

In der Prozessautomatisierungstechnik werden vielfach Feldgeräte eingesetzt, die zur Erfassung und/oder Beeinflussung von Prozessvariablen dienen. Zur Erfassung von Prozessvariablen dienen Sensoren, wie beispielsweise Füllstandsmessgeräte, Durchflussmessgeräte, Druck- und Temperaturmessgeräte, pH-Redoxpotentialmessgeräte, Leitfähigkeitsmessgeräte, etc., welche die entsprechenden Prozessvariablen Füllstand, Durchfluss, Druck, Temperatur, pH-Wert bzw. Leitfähigkeit erfassen. Zur Beeinflussung von Prozessvariablen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann. Als Feldgeräte werden im Prinzip alle Geräte bezeichnet, die prozessnah eingesetzt werden und die prozessrelevante Informationen liefern oder verarbeiten. Eine Vielzahl solcher Feldgeräte wird von der Firma Endress + Hauser hergestellt und vertrieben.

In modernen Industrieanlagen sind Feldgeräte in der Regel über Bussysteme (Profibus®, Foundation® Fieldbus, HART®, etc.) mit übergeordneten Einheiten verbunden. Normalerweise handelt es sich bei den übergeordneten Einheiten um Leitsysteme bzw. Steuereinheiten, wie beispielsweise SPS (speicherprogrammierbare Steuerung) oder PLC (Programmable Logic Controller). Die übergeordneten Einheiten dienen unter anderem zur Prozesssteuerung, Prozessvisualisierung, Prozessüberwachung sowie zur Inbetriebnahme der Feldgeräte. Die von den Feldgeräten, insbesondere von Sensoren, erfassten Messwerte werden über das jeweilige Bussystem an eine (oder gegebenenfalls mehrere) übergeordnete Einheit(en) übermittelt. Daneben ist auch eine Datenübertragung von der übergeordneten Einheit über das Bussystem an die Feldgeräte erforderlich, insbesondere zur Konfigurierung und Parametrierung von Feldgeräten sowie zur Ansteuerung von Aktoren.

Neben einer drahtgebundenen Datenübertragung zwischen den Feldgeräten und der übergeordneten Einheit besteht auch die Möglichkeit einer drahtlosen (wireless) Datenübertragung. Insbesondere in den Bussystemen Profibus®, Foundation® Fieldbus und HART® ist solch eine drahtlose Datenübertragung über Funk spezifiziert. Ferner sind Funknetzwerke für Sensoren in dem Standard IEEE 802.15.4 näher spezifiziert. Zur Realisierung solch einer drahtlosen Datenübertragung sind neuere Feldgeräte teilweise als Funk-Feldgeräte ausgebildet.

Daneben besteht die Möglichkeit, Feldgeräte ohne Funkeinheit durch Anschluss eines Wireless Adapters, der eine Funkeinheit aufweist, zu einem Funk-Feldgerät aufzurüsten. Der Wireless Adapter wird dabei über eine Feldbus-Kommunikationsschnittstelle des Feldgerätes an dem betreffenden Feldgerät angeschlossen. Über die Feldbus-Kommunikationsschnittstelle kann das Feldgerät die über das Bussystem zu übermittelnden Daten an den Wireless Adapter senden, der diese dann über Funk an den Zielort übermittelt. Umgekehrt kann der Wireless Adapter über Funk Daten empfangen und über die Feldbus-Kommunikationsschnittstelle an das Feldgerät weiterleiten. Beispielsweise ist in der Druckschrift WO 2005/103851 A1 ein Wireless Adapter beschrieben, durch den ein herkömmliches Feldgerät zu einem Funk-Feldgerät aufgerüstet werden kann.

Herkömmliche Feldgeräte werden in der Regel über das Bussystem oder über separat hierfür vorgesehene Leitungen mit elektrischer Leistung versorgt. Erfolgt die Energieversorgung eines Feldgerätes über den Feldbus, so werden diese Feldgeräte als busgespeiste oder 2-Leiter-Geräte bezeichnet. In diesem Fall erfolgt sowohl die Kommunikation als auch die Stromversorgung über eine gemeinsame 2-Leiter-Verbindung. Ist neben dem Feldbus eine zusätzliche 2-Leiter-Verbindung für die Versorgung mit elektrischer Leistung vorgesehen, so werden diese Feldgeräte als 4-Leiter-Geräte bezeichnet. Insbesondere bei den busgespeisten Feldgeräten ist erforderlich, dass diese, wenn sie durch Anschluss eines Wireless Adapters zu einem Funk-Feldgerät aufgerüstet werden, von dem Wireless Adapter über deren Feldbus-Kommunikationsschnittstelle mit elektrischer Leistung versorgt werden. Hierzu weist der Wireless Adapter in der Regel eine Stromquelle, wie beispielsweise eine Batterie, eine Brennstoffzelle, einen Akku, etc., auf. In dem Wireless Adapter sind in der Regel zwei Netzteilstufen vorgesehen, wobei eine erste Netzteilstufe für die interne Versorgung der Systemkomponenten des Adapters und die zweite Netzteilstufe für die externe Versorgung der Systemkomponenten des Feldgerätes dient. Beide Netzteilstufen sind ständig an der Stromquelle angeschlossen. Auch in dem Feldgerät ist in der Regel eine Netzteilstufe vorgesehen, die zur Versorgung der Systemkomponenten des Feldgerätes mit elektrischer Leistung dient. Die Netzteilstufe des Feldgerätes ist dabei ständig an der Feldbus-Kommunikationsschnittstelle angeschlossen und wird über diese von dem Wireless Adapter mit elektrischer Leistung versorgt.

Da bei solchen busgespeisten Feldgeräten sowohl die Kommunikation als auch die Versorgung mit elektrischer Leistung über die Feldbus-Kommunikationsschnittstelle des Feldgerätes erfolgt, ergeben sich entsprechende Beschränkungen bei der Versorgung mit elektrischer Leistung. Ist beispielsweise die Feldbus-Kommunikationsschnittstelle des Feldgerätes gemäß dem HART®-Bussystem ausgebildet und erfolgt die Kommunikation zwischen dem Feldgerät und dem Wireless Adapter gemäß dem HART®-Standard, so wird ein Messwert analog durch den Absolutwert des Stromes übermittelt. Je nach zu übermittelnden Messwert wird der Stromwert bei der Kommunikation über die Feldbus-Kommunikationsschnittstelle auf einen Wert zwischen 4 mA und 20 mA eingestellt (im Folgenden: "analoge Messwertübertragung gemäß dem 4-20 mA HART®-Standard"). Um auch bei einem minimalen Stromwert von 4 mA eine ausreichende Versorgung des Feldgerätes mit elektrischer Leistung zu gewährleisten, wird in der zweiten Netzteilstufe des Wireless Adapters die Spannung auf einen entsprechend hohen Wert transformiert. In der Netzteilstufe des Feldgerätes muss die Spannung dann wieder auf einen Wert transformiert werden, der einer von den einzelnen Systemkomponenten des Feldgerätes benötigten Spannung entspricht. Eine ähnliche Problematik ergibt sich auch bei den Bussystemen Profibus® und Foundation® Fieldbus, bei denen der über die Feldbus-Kommunikationsschnittstelle des Feldgerätes fließende Strom ebenfalls begrenzt ist.

Durch diese Spannungs-Transformationen in dem Wireless Adapter und dem Feldgerät sind erhebliche Energieverluste bedingt. Ferner wird von der zweiten Netzteilstufe des Wireless Adapters ein Mindestwert an elektrischer Leistung an das Feldgerät geliefert, der durch den Mindeststromwert von 4 mA und die Spannung, die von der zweiten Netzteilstufe bereitgestellt wird, gegeben ist. Selbst wenn der Leistungsbedarf des Feldgerätes niedriger ist, was beispielsweise dann der Fall ist, wenn von dem Feldgerät (Sensor) kein Messwert aufgenommen wird, wenn von dem Feldgerät (Aktor) keine Aktion ausgeführt wird und/oder wenn das Feldgerät in einem Standby-Modus ist, wird dennoch der an das Feldgerät gelieferte Mindestwert an elektrischer Leistung verbraucht. Um die Lebensdauer der Energiequelle des Wireless Adapters und damit die Wartungsintervalle zu verlängern, muss der Leistungsverbrauch des Systems aus Wireless Adapter und Feldgerät reduziert werden. Zum Teil wurde aus diesem Grund das Feldgerät in den Zeiten, in denen es nicht benötigt wird, ausgeschaltet. Diese Vorgehensweise hat den Nachteil, dass von dem Feldgerät jedes Mal dann, wenn das Feldgerät zur Aufnahme eines Messwertes oder zur Durchführung einer Aktion angeschaltet wird, ein Anlaufmodus durchlaufen wird. In solch einem Anlaufmodus werden beispielsweise Selbstchecks durchgeführt, Kondensatoren aufgeladen, etc. Dadurch wird wiederum zusätzliche Energie verbraucht. Ferner ergibt sich dadurch eine Zeitverzögerung.

Aus dem Stand der Technik ist aus der WO 2005/116787 A1 eine drahtlose Energie- und Kommunikationseinheit für Feldgeräte bekannt geworden, die vorzugsweise eine digitale drahtgebundene Kommunikation zu dem Feldgerät sowie die Energieversorgung für dieses ermöglicht. Die drahtlose Energie- und Kommunikationseinheit dient hierbei dazu, mit dem Feldgerät über die drahtgebundene Kommunikation zu interagieren und mittels einer RF-Schaltung drahtlose mit einem externen Gerät zu kommunizieren.

Ebenfalls aus dem Stand der Technik ist aus der WO 2005/040735 A1 ein Zwei-Draht-Bus-Instrument zur Verwendung mit einem Zwei-Draht-Bus bekannt geworden. Das Zwei-Draht-Bus-Instrument erzeugt mittels eines dritten Stromes ein oder mehrere Sensormesssignale, wobei ein Signalprozessor einen zweiten Strom empfängt und die ein oder mehreren Sensormesssignale verarbeitet, um ein Datensignal zu erzeugen, welches von einem Kommunikationssystem empfangen wird, um ein digitales Kommunikationssignal einschließlich des Datensignals zu erzeugen und dieses auf den Zwei-Draht-Bus zu modulieren.

Demgemäß besteht die Aufgabe der vorliegenden Erfindung darin, ein Verfahren zum Betreiben eines Feldgerätes, das über einen Wireless Adapter mit elektrischer Leistung versorgt wird, sowie ein Feldgerät bereitzustellen, durch das ein energiesparender Betrieb des Feldgerätes ermöglicht wird.

Die Aufgabe wird durch ein Verfahren gemäß Anspruch 1 sowie durch ein Feldgerät für ein Funksystem gemäß Anspruch 11 gelöst. Vorteilhafte Weiterbildungen der Erfindung sind in den Unteransprüchen angegeben.

Gemäß der vorliegenden Erfindung wird ein Verfahren zum Betreiben eines Feldgerätes der Prozessautomatisierungstechnik mit einer Feldbus-Kommunikationsschnittstelle, an der ein Wireless Adapter angeschlossen ist, bereitgestellt. Das Feldgerät ist von dem Wireless Adapter über die Feldbus-Kommunikationsschnittstelle mit elektrischer Leistung versorgbar. Zur Realisierung eines leistungsangepassten und damit energiesparenden Modus wird ein über die Feldbus-Kommunikationsschnittstelle fließender Strom nicht begrenzt, so dass er sich frei, entsprechend einem jeweiligen Leistungsbedarf, einstellen kann.

Als Feldbus-Kommunikationsschnittstelle wird dabei die Schnittstelle des Feldgerätes bezeichnet, die zum Anschluss an den jeweiligen Feldbus (z.B. HART®-Bussystem) ausgebildet ist, dient. Dabei kann die Feldbus-Kommunikationsschnittstelle an dem Feldgerät entsprechend dem jeweiligen Busstandard ausgebildet sein. Eine Abänderung zur Realisierung des erfindungsgemäßen Verfahrens ist nicht erforderlich. Als Wireless Adapter wird ein Funkmodul beschrieben, das, vorzugsweise lösbar, an dem Feldgerät angeschlossen werden kann und für das Feldgerät eine drahtlose Signal- und Datenübertragung realisiert.

Dadurch, dass der über die Feldbus-Kommunikationsschnittstelle fließende Strom nicht begrenzt wird, kann er sich je nach Leistungsbedarf einstellen. Wird durch das Feldgerät beispielsweise gerade keine Messung oder Aktion ausgeführt, so kann sich der Stromwert auch auf wenige µA und damit unter den minimalen Stromwert, der bei dem jeweiligen Bussystem standardmäßig vorgesehen ist (bei HART® z.B. 4 mA), einstellen. Dadurch ist ein energiesparender Standby-Modus realisierbar. Ein zeitweises Ausschalten des Feldgerätes ist hierdurch nicht mehr erforderlich. Wird umgekehrt eine hohe elektrische Leistung benötigt, so kann sich der Stromwert auch auf einen höheren Wert als den maximalen Stromwert, der bei dem jeweiligen Bussystem standardmäßig vorgesehen ist (bei HART® z.B. 20 mA), einstellen. Dadurch ist nicht mehr erforderlich, die Spannung für die Übertragung der elektrischen Leistung über die Feldbus-Kommunikationsschnittstelle auf einen so hohen Wert zu transformieren.

Der Leistungsbedarf, der den Stromfluss über die Feldbus-Kommunikationsschnittstelle bestimmt, wird maßgeblich durch den Leistungsbedarf des Feldgerätes bestimmt. Insbesondere dann, wenn das Feldgerät eine Messung aufnimmt oder eine Aktion durchführt, ist der Leistungsbedarf stark erhöht. Je nach schaltungstechnischer Realisierung kann dieser Leistungsbedarf auch (in der Regel in geringerem Maße) durch Systemkomponenten des Wireless Adapters mitbestimmt werden. Durch das Merkmal, dass sich der Strom frei, entsprechend einem jeweiligen Leistungsbedarf, einstellen kann, wird ferner nicht ausgeschlossen, dass eine Sicherung oder eine anderweitige Schaltung vorgesehen ist, die ein Überschreiten eines maximalen Stromwertes, wie beispielsweise im Falle eines Kurzschlusses, verhindert.

In dem leistungsangepassten Modus kann weiterhin eine Kommunikation zwischen dem Wireless Adapter und dem Feldgerät realisiert werden, die beispielsweise entsprechend dem jeweiligen Bussystem durch Überlagerung von digitalen Kommunikationssignalen über das Stromsignal realisiert wird. Vorzugsweise ist die Feldbus-Kommunikationsschnittstelle (des Feldgerätes) und auch eine damit verbundene Schnittstelle des Wireless Adapters als 2-Leiter-Schnittstelle (entsprechend dem jeweiligen Bussystem) ausgebildet. Vorzugsweise erfolgt die Kommunikation gemäß dem Profibus®-Standard, dem Foundation®-Fieldbus-Standard oder dem HART®-Standard. Gemäß einer vorteilhaften Weiterbildung der Erfindung erfolgt die Kommunikation über die Feldbus-Kommunikationsschnittstelle gemäß dem HART®-Standard. Da der Absolutwert des Stromsignals in dem erfindungsgemäßen leistungsangepassten Modus nicht mehr eingestellt wird, sondern durch den jeweiligen Leistungsbedarf bestimmt wird, werden in diesem Modus Daten, insbesondere zu übertragende Messwerte, ausschließlich durch ein dem Stromsignal überlagertes digitales Kommunikationssignal (entsprechend dem HART®-Standard) kommuniziert. Vorzugsweise wird der FSK (Frequency Shift Keying) Standard angewendet.

Gemäß einer vorteilhaften Weiterbildung wird mindestens eine Systemkomponente des Feldgerätes und/oder des Wireless Adapters, insbesondere ein Messwertaufnehmer (bzw. ein Sensor) des Feldgerätes, während eines Zeitraumes, in dem diese Systemkomponente nicht benötigt wird, von der Leistungsversorgung getrennt. Dies kann beispielsweise durch eine Schaltung realisiert werden, die von der Steuereinheit des Feldgerätes und/oder des Wireless Adapters angesteuert wird. Dadurch verbrauchen vorübergehend nicht benötigte Systemkomponenten nicht unnötig elektrische Leistung.

Gemäß einer vorteilhaften Weiterbildung weist der Wireless Adapter eine erste Adapter-Netzteilstufe, die für einen ersten Leistungsbereich ausgelegt ist, und mindestens eine zweite Adapter-Netzteilstufe, die für einen zweiten Leistungsbereich ausgelegt ist, auf, wobei der zweite Leistungsbereich höher als der erste Leistungsbereich ist. Vorzugsweise weist auch das Feldgerät eine erste Feldgerät-Netzteilstufe, die für einen dritten Leistungsbereich ausgelegt ist, und mindestens eine zweite Feldgerät-Netzteilstufe, die für einen vierten Leistungsbereich ausgelegt ist, auf, wobei der vierte Leistungsbereich höher als der dritte Leistungsbereich ist. Der erste und der zweite Leistungsbereich bzw. der dritte und der vierte Leistungsbereich können sich dabei auch teilweise überschneiden.

In den jeweiligen Netzteilstufen wird hierbei die Spannung auf einen gewünschten Wert transformiert, falls die Eingangsspannung derselben nicht dem gewünschten Spannungswert entspricht. Ferner können in den einzelnen Netzteilstufen Regelschaltungen zur Spannungsstabilisierung sowie entsprechende Schaltungen zur Realisierung der erforderlichen Schutzmaßnahmen für einen Ex-Bereich (explosionsgefährdeter Bereich) vorgesehen sein. Zusätzlich kann durch die einzelnen Netzteilstufen auch eine galvanische Netztrennung realisiert werden, falls dies erforderlich ist. Entsprechend dem jeweiligen Leistungsbereich, für den die einzelnen Netzteilstufen ausgelegt sind, werden eine oder mehrere der oberhalb angegebenen Funktionen der Netzteilstufen angepasst.

Vorzugsweise werden jeweils die ersten Netzteilstufen des Wireless Adapters und des Feldgerätes miteinander oder jeweils die zweiten Netzteilstufen des Wireless Adapters und des Feldgerätes miteinander über die Feldbus-Kommunikationsschnittstelle verbunden. Hierzu kann das Feldgerät und/oder der Wireless Adapter jeweils einen von einer Steuereinheit (z.B. CPU) des Feldgerätes bzw. des Wireless Adapters angesteuerten Leistungsschalter aufweisen, wobei die erste und die zweite Netzteilstufe jeweils durch den betreffenden Leistungsschalter mit der Feldbus-Kommunikationsschnittstelle verbindbar sind.

Gemäß einer vorteilhaften Weiterbildung werden durch die erste Adapter-Netzteilstufe zumindest Systemkomponenten des Adapters, die einen niedrigen Leistungsbedarf aufweisen, insbesondere eine Steuereinheit (z.B. CPU), eine Schaltung, durch die eine Kommunikation mit dem Feldgerät realisiert wird und/oder eine Funkeinheit, mit elektrischer Leistung versorgt. Vorzugsweise werden durch die erste Feldgerät-Netzteilstufe zumindest Systemkomponenten des Feldgerätes, die einen niedrigen Leistungsbedarf aufweisen, insbesondere eine Steuereinheit und/oder eine Schaltung, durch die eine Kommunikation mit dem Wireless Adapter realisiert wird, versorgt. Ferner kann vorgesehen sein, dass dann, wenn die zweiten Netzteilstufen des Feldgerätes und des Wireless Adapters über die Feldbus-Kommunikationsschnittstelle miteinander verbunden sind, zusätzlich auch die erste Adapter-Netzteilstufe mit einer Stromquelle des Adapters und/oder die erste Feldgerät-Netzteilstufe mit der Feldbus-Kommunikationsschnittstelle verbunden ist/sind. Dadurch werden diese ersten Netzteilstufen jeweils direkt von der Stromquelle bzw. über die Feldbus-Kommunikationsschnittstelle versorgt. Alternativ dazu kann vorgesehen sein, dass die erste Adapter-Netzteilstufe von der zweiten Adapter-Netzteilstufe und/oder die erste Feldgerät-Netzteilstufe von der zweiten Feldgerät-Netzteilstufe mit elektrischer Leistung versorgt wird/werden.

Gemäß einer vorteilhaften Weiterbildung weist die erste Netzteilstufe des Feldgerätes und/oder des Wireless Adapters eine Ausgangsspannung auf, die niedriger ist als die Ausgangsspannung der jeweiligen zweiten Netzteilstufe des Feldgerätes und/oder des Wireless Adapters. Beispielsweise kann/können die Ausgangsspannung(en) der ersten Netzteilstufe(n) in einem Bereich von 1,7 V bis 5 V, vorzugsweise im Bereich von 1,7 V bis 3,5 V liegen, und die Ausgangsspannung(en) der zweiten Netzteilstufe(n) in einem Bereich von 8 V bis 22 V liegen. Dabei sind aus Energiespargründen allgemein niedrige Ausgangsspannungen der ersten und zweiten Netzteilstufen bevorzugt, da bei niedrigen Spannungswerten der Leistungsverbrauch der Systemkomponenten geringer ist. Ferner kann vorgesehen sein, dass die Ausgangsspannungen einer oder beider der ersten Netzteilstufen und/oder einer oder beider der zweiten Netzteilstufen einstellbar sind. Ferner kann vorgesehen sein, dass die Ausgangsspannung der ersten Netzteilstufe des Feldgerätes und/oder des Wireless Adapters und die Ausgangsspannung der zugehörigen zweiten Netzteilstufe des Feldgerätes und/oder des Wireless Adapters im Wesentlichen gleich hoch sind, und die erste und die zweite Netzteilstufe jeweils für einen unterschiedlich hohen Strombereich ausgelegt sind.

Gemäß einer vorteilhaften Weiterbildung sind das Feldgerät und der Wireless Adapter alternativ zu dem oberhalb erläuterten leistungsangepassten Modus auch in einem Standard-Modus betreibbar, in dem der über die Feldbus-Kommunikationsschnittstelle fließende Strom auf einen vorgegebenen Wert, insbesondere auf einen über die Feldbus-Kommunikationsschnittstelle gemäß dem HART®-Standard analog zu übertragenden Messwert, eingestellt wird, wobei die Stromeinstellung vorzugsweise durch eine entsprechende Stromeinstellungsschaltung in dem Feldgerät realisiert wird. Die Stromeinstellungsschaltung wird vorzugsweise durch eine Steuereinheit des Feldgerätes angesteuert.

Gemäß einer vorteilhaften Weiterbildung wird über die Feldbus-Kommunikationsschnittstelle zwischen dem Wireless Adapter und dem Feldgerät durch entsprechend spezifizierte Kommandos, insbesondere durch entsprechend spezifizierte HART®-Kommandos, kommuniziert, in welchem Modus das Feldgerät und der Wireless Adapter zu betreiben sind. Vorzugsweise wird eine Umschaltung zwischen den jeweiligen Modi durch eine in dem Feldgerät vorgesehene Steuereinheit und/oder durch eine in dem Wireless Adapter vorgesehe Steuereinheit gesteuert. Vorzugsweise erfolgt die Umschaltung in Abhängigkeit davon, ob durch das Feldgerät im betreffenden Zeitpunkt ein Messwert aufgenommen oder eine Aktion ausgeführt wird, oder ob das Feldgerät in dem betreffenden Zeitpunkt in einem Standby-Betrieb ist. Ferner kann auch vorgesehen sein, dass der Wechsel zwischen dem leistungsangepassten Modus mit hohem Leistungsbedarf und dem leistungsangepassten Modus mit niedrigem Leistungsbedarf automatisch ohne explizite Anforderung durch den Wireless Adapter erfolgt, beispielsweise immer dann, wenn ein Messwert über die Feldbus-Kommunikationsschnittstelle von dem Feldgerät angefordert wird.

Gemäß der vorliegenden Erfindung wird ferner ein Feldgerät der Prozessautomatisierungstechnik mit einer Feldbus-Kommunikationsschnittstelle und einer Stromeinstellungsschaltung für ein Funksystem, wobei durch die Stromeinstellungsschaltung ein über die Feldbus-Kommunikationsschnittstelle fließender Strom auf einen vorgegebenen Wert, insbesondere auf einen über die Feldbus-Kommunikationsschnittstelle gemäß dem HART®-Standard analog zu übertragenden Messwert, einstellbar ist, bereitgestellt. Das Feldgerät ist dabei in einen leistungsangepassten Modus umschaltbar, in dem der über die Feldbus-Kommunikationsschnittstelle fließende Strom nicht durch die Stromeinstellungsschaltung eingestellt wird. Alternativ kann vorgesehen sein, dass das Feldgerät derart ausgebildet ist, dass es keine Stromeinstellungsschaltung aufweist und dauerhaft in dem leistungsangepassten Modus betrieben wird. Demgemäß können bei diesem Feldgerät dann, wenn es über die Feldbus-Kommunikationsschnittstelle von einem daran angeschlossenen Wireless Adapter mit elektrischer Leistung versorgt wird, die oberhalb in Bezug auf das erfindungsgemäße Verfahren erläuterten Vorteile erzielt werden. Ferner sind die oberhalb genannten und in den Unteransprüchen angegebenen Weiterbildungen und Varianten in entsprechender Weise auch bei dem erfindungsgemäßen Feldgerät und insbesondere bei einem Funksystem, das ein solches Feldgerät und einen daran angeschlossenen Wireless Adapter aufweist, realisierbar. Die einzelnen Verfahrensschritte und Merkmale können jeweils durch entsprechende Schaltungen realisiert werden.

Weitere Vorteile und Zweckmäßigkeiten der Erfindung ergeben sich anhand der nachfolgenden Beschreibung von Ausführungsbeispielen unter Bezugnahme auf die beigefügten Figuren. Von den Figuren zeigen:

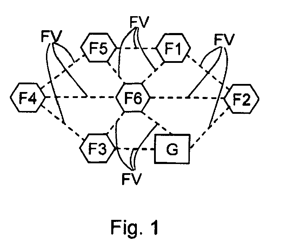

- Fig. 1:: eine schematische Darstellung eines Funknetzwerkes mit mehreren Feldgeräten;

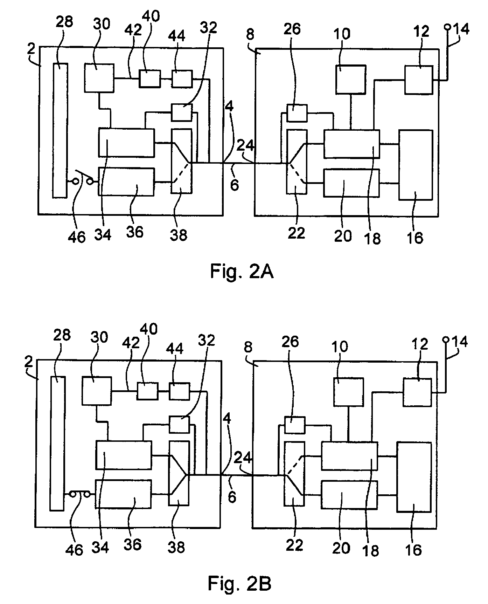

- Fig. 2:: ein Blockschaltbild eines Feldgerätes und eines angeschlossenen Wireless Adapters gemäß einer ersten Ausführungsform, wobei Fig. 2A den Schaltzustand in einem leistungsangepassten Modus mit niedrigem Leistungsbedarf und Fig. 2B den Schaltzustand in einem leistungsangepassten Modus mit hohem Leistungsbedarf zeigt; und

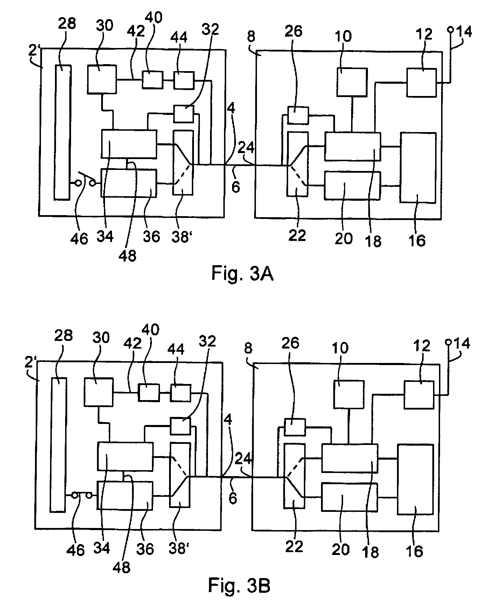

- Fig 3:: ein Blockschaltbild eines Feldgerätes und eines angeschlossenen Wireless Adapters gemäß einer zweiten Ausführungsform, wobei Fig. 3A den Schaltzustand in einem leistungsangepassten Modus mit niedrigem Leistungsbedarf und Fig. 3B den Schaltzustand in einem leistungsangepassten Modus mit hohem Leistungsbedarf zeigt.

In Fig. 1 ist ein Funknetzwerk mit mehreren Feldgeräten F1, F2, ..., F6, die jeweils als Funk-Feldgeräte ausgebildet sind, und einem Gateway G dargestellt. Die Feldgeräte F1, F2, ..., F6 stehen untereinander und mit dem Gateway G jeweils in Funkverbindung FV, was in Fig. 1 durch die gestrichelten Linien dargestellt ist. Dadurch, dass die Feldgeräte F1, F2, ..., F6 und das Gateway G jeweils über mehrere Funkverbindungen FV in Verbindung stehen, kann selbst bei einem Ausfall einer der Funkverbindungen FV die Kommunikation über eine der anderen Funkverbindungen FV aufrechterhalten werden. Als Funkübertragungstechnologien für die Funkverbindungen FV sind beispielsweise Frequency Hopping Spread Spectrum (FHSS) oder Direct Sequence Spread Spectrum (DSSS) Verfahren geeignet. Aufgrund der benötigten geringen Sendeleistungen ist auch die Ultrawideband-Technologie (UWB) sehr gut geeignet. Bei dem Gateway G kann es sich um eine Fernübertragungseinheit, z.B. das Produkt "Fieldgate" der Firma Endress + Hauser, handeln. In diesem Fall kann das Gateway G weltweit zum Beispiel via Internet, GSM oder Festnetz mit einer übergeordneten Einheit kommunizieren.

In den Fig. 2A und 2B ist ein Feldgerät 2 mit einer Feldbus-Kommunikationsschnittstelle 4 dargestellt. An der Feldbus-Kommunikationsschnittstelle 4 ist über eine Zweidrahtleitung 6 ein Wireless Adapter 8 lösbar angeschlossen. Der Wireless Adapter 8 weist eine Steuereinheit 10, die beispielsweise als CPU oder als Mikrocontroller ausgebildet sein kann, eine Funkeinheit 12, die ein RF-Chipset und eine Antenne 14 aufweist, sowie eine Stromquelle 16 in Form einer Batterie auf. An der Stromquelle 16 sind eine erste Adapter-Netzteilstufe 18, die für einen ersten, niedrigen Leistungsbereich ausgelegt ist, und eine zweite Adapter-Netzteilstufe 20, die für einen zweiten, höheren Leistungsbereich ausgelegt ist, angeschlossen. Über einen Leistungsschalter (Power Switch) 22 können wahlweise die erste Adapter-Netzteilstufe 18 oder die zweite Adapter-Netzteilstufe 20 mit der Feldbus-Kommunikationsschnittstelle 4 des Feldgerätes 2 verbunden werden. Durch Anschluss des Wireless Adpaters 8 wird das Feldgerät 2 zu einem Funk-Feldgerät, wie es beispielsweise in Fig. 1 durch die Feldgeräte F1, F2, ..., F6 gebildet wird, aufgerüstet.

Die Feldbus-Kommunikationsschnittstelle 4 (des Feldgerätes 2) und eine entsprechende Schnittstelle 24 des Wireless Adapters 8 sind entsprechend dem HART®-Bussystem ausgebildet, und die Datenübertragung zwischen dem Feldgerät 2 und dem Wireless Adapter 8 erfolgt demgemäß entsprechend dem HART®-Standard. Das HART®-Bussystem eignet sich aufgrund der geringen Übertragungsgeschwindigkeit besonders gut für den Einsatz in Funknetzwerken. Für die Überlagerung des Stromsignals, das über die Zweidrahtleitung 6 an das Feldgerät 2 übertragen wird, mit einem digitalen Kommunikationssignal (entsprechend dem HART®-Standard) ist in dem Wireless Adapter 8 ein HART® Modem Interface 26 vorgesehen. Das HART® Modem Interface 26, der Leistungsschalter 22, die zweite Adapter-Netzteilstufe 20 und die Funkeinheit 12 werden von der Steuereinheit 10 über (nicht dargestellte) Steuerleitungen angesteuert.

Das Feldgerät 2 ist als Sensor ausgebildet und weist dementsprechend einen Messwertaufnehmer 28 auf. Ähnlich wie der Wireless Adapter 8 weist auch das Feldgerät 2 eine Steuereinheit 30 sowie ein HART® Modem Interface 32 auf. Ferner weist das Feldgerät 2 eine erste Feldgerät-Netzteilstufe 34, die für einen dritten, niedrigeren Leistungsbereich ausgelegt ist, und eine zweite Feldgerät-Netzteilstufe 36, die für einen vierten, höheren Leistungsbereich ausgelegt ist, auf. Über einen Leistungsschalter 38 ist wahlweise die erste Feldgerät-Netzteilstufe 34 alleine oder die erste Feldgerät-Netzteilstufe 34 zusammen mit der zweiten Feldgerät-Netzteilstufe 36 mit der Feldbus-Kommunikationsschnittstelle 4 verbindbar. Der Messwertaufnehmer 28 gibt über eine (nicht dargestellte) Signalleitung einen erfassten Messwert an die Steuereinheit 30 weiter. Um den erfassten Messwert entsprechend dem HART®-Standard als analoges Stromsignal über die Zweidrahtleitung 6 an den Wireless Adapter 8 zu übertragen, sind in dem Feldgerät 2 ein D/A-Wandler 40, der von der Steuereinheit 30 über eine Steuerleitung 42 angesteuert wird, sowie eine von dem D/A-Wandler 40 angesteuerte Stromsenke 44, die als Schaltung zur Einstellung bzw. Begrenzung eines über die Zweidrahtleitung 6 übertragenen Stromes ausgebildet ist, vorgesehen. Wie allgemein bei der Datenübertragung gemäß dem HART®-Standard bekannt ist, wird durch die Stromsenke 44 ein über die Zweidrahtleitung 4 übertragener Stromwert entsprechend dem erfassten Messwert auf einen Wert zwischen 4 mA und 20 mA eingestellt bzw. begrenzt. Neben dem D/A-Wandler 40 wird durch die Steuereinheit 40 ferner auch das HART® Modem Interface 32, der Leistungsschalter 38 sowie die zweite Feldgerät-Netzteilstufe 36 über (nicht dargestellte) Steuerleitungen angesteuert.

Der dritte Leistungsbereich der ersten Feldgerät-Netzteilstufe 34 ist dabei derart gewählt, dass die Systemkomponenten des Feldgerätes 2, die einen niedrigen Leistungsbedarf haben, über die erste Feldgerät-Netzteilstufe 34 mit elektrischer Leistung versorgt werden können. In dem vorliegenden Ausführungsbeispiel sind dies beispielsweise die Steuereinheit 30 und das HART® Modem Interface 32. Je nach Realisierung des Feldgerätes 2 können hierzu noch weitere Systemkomponenten hinzukommen. Ferner ist der Messwertaufnehmer 28 über einen Schalter 46, der über eine (nicht dargestellte) Steuerleitung von der Steuereinheit 30 ansteuerbar ist, mit der zweiten Feldgerät-Netzteilstufe 36 verbunden, so dass er bei geschlossenem Schalter 46 von dieser mit elektrischer Leistung versorgbar ist. Der vierte Leistungsbereich der zweiten Feldgerät-Netzteilstufe 36 ist dabei derart gewählt, dass der Messwertaufnehmer 28, der im Einsatz in der Regel einen deutlich höheren Leistungsbedarf als die weiteren Systemkomponenten des Feldgerätes 2 (und des Wireless Adapters 8) aufweist, über die zweite Netzteilstufe 36 mit elektrischer Leistung versorgbar ist.

Ferner ist der erste Leistungsbereich der ersten Adapter-Netzteilstufe 18 derart gewählt, dass die Systemkomponenten des Adapters 8, die einen niedrigen Leistungsbedarf haben, sowie zusätzlich die erste Feldgerät-Netzteilstufe 34 (und damit die Systemkomponenten 30, 32 des Feldgerätes 2, die einen niedrigen Leistungsbedarf haben), über die erste Adapter-Netzteilstufe 18 mit elektrischer Leistung versorgt werden können. Ferner ist der zweite Leistungsbereich der zweiten Adapter-Netzteilstufe 20 derart gewählt, dass sowohl die erste 34 als auch die zweite 36 Feldgerät-Netzteilstufe gemeinsam von der zweiten Adapter-Netzteilstufe 20 mit elektrischer Leistung versorgt werden können.

Im vorliegenden Ausführungsbeispiel werden beispielsweise die Steuereinheiten 30 und 10, die HART® Modem Interfaces 32 und 26 sowie die Funkeinheit 12 jeweils bei 3 V betrieben. Dementsprechend werden durch die ersten Netzteilstufen 18 und 34 jeweils eine Ausgangsspannung von 3 V bereitgestellt. Die von der Stromquelle 16 bereitgestellte Ausgangsspannung beträgt im vorliegenden Ausführungsbeispiel 3,6 V, so dass in der ersten Adapter-Netzteilstufe 18 eine Transformation von 3,6 V auf 3,0 V durchgeführt wird. Messwertaufnehmer werden in der Regel bei einer Spannung im Bereich von 10 V bis 20 V betrieben. Der Messwertaufnehmer 28 wird im vorliegenden Ausführungsbeispiel bei 15 V betrieben. Dementsprechend stellt die zweite Feldgerät-Netzteilstufe 36 eine Spannung von 15 V bereit. Vorzugsweise wird die Spannung bereits in der zweiten Adapter-Netzteilstufe 20 auf diesen Wert transformiert, so dass in der zweiten Feldgerät-Netzteilstufe 36 keine Spannungstransformation erforderlich ist. Der Strombedarf der oberhalb genannten Systemkomponenten variiert dabei je nach Auslastung.

Die Umschaltung in einen der leistungsangepassten Modi oder auch die Umschaltung in den Standard-HART®-Modus kann dabei sowohl durch den Wireless Adapter 8 von dem Feldgerät 2 angefordert werden als auch umgekehrt. Die Anforderung einer Umschaltung geschieht hierbei entsprechend dem HART®-Standard, wobei hierzu spezielle HART®-Kommandos, die als digitale Kommunikationssignale dem Stromsignal überlagert werden, spezifiziert werden. Beispielsweise kann der Wireless. Adapter 8 das Feldgerät 2 durch Übersenden eines entsprechenden HART®-Kommandos dazu auffordern, in den leistungsangepassten Modus für einen niedrigen Leistungsbedarf zu wechseln. Daraufhin gibt das Feldgerät 2 seine Standard 4-20 mA Funktion auf, was bedeutet, dass die von dem Feldgerät 2 ausgehende Kommunikation ausschließlich durch Überlagerung von digitalen Kommunikationssignalen über das Stromsignal, wie es in dem HART®-Standard spezifiziert ist (FSK-Verfahren), erfolgt. Hierzu wird die Stromsenke 44 des Feldgerätes 2 derart angesteuert oder überbrückt, dass sie nicht mehr den Strom, der über die Feldbus-Kommunikationsschnittstelle 4 fließt, begrenzt. Der absolute Stromwert des Stromsignals ist für die Kommunikation nicht mehr bedeutend. Ferner werden die beiden Leistungsschalter 22 und 38 durch die jeweilige Steuereinheit 10 bzw. 30 des Wireless Adapters 8 und des Feldgeräts 2 derart angesteuert, dass sie jeweils die ersten Netzteilstufen 18 und 34 mit der Feldbus-Kommunikationsschnittstelle 4 verbinden. Die zweiten Netzteilstufen 20 und 36 sind jeweils von der Feldbus-Kommunikationsschnittstelle 4 getrennt. Ferner ist der Schalter 46 geöffnet. Diese Schaltstellung ist in Fig. 2A dargestellt. In diesem leistungsangepassten Modus mit einem niedrigen Leistungsbedarf kann das Feldgerät 2 beispielsweise in einem Standby-Betrieb betrieben werden. Da der Stromwert, der dem Feldgerät 2 über die Feldbus-Kommunikationsschnittstelle 4 zugeführt wird, nicht auf einen Mindestwert von 4 mA begrenzt ist, kann er auf einen deutlich niedrigeren Wert (beispielsweise bis auf wenige µA) absinken. Dadurch kann ein energiesparender Standby-Betrieb realisiert werden. Ferner können die einzelnen versorgten Systemkomponenten durch die beiden ersten Netzteilstufen 18 und 34 effektiv auf die Stromquelle 16 angepasst werden, wodurch Energie eingespart wird.

Erhält der Wireless Adapter 8 über die Funkeinheit 12 eine Anforderung eines Messwertes (beispielsweise von einer übergeordneten Einheit), so fordert er das Feldgerät 2 auf, in den leistungsangepassten Modus mit hohem Leistungsbedarf umzuschalten. Die Stromsenke 44 des Feldgerätes 2 wird dabei weiterhin derart angesteuert oder überbrückt, dass der Strom, der über die Feldbus-Kommunikationsschnittstelle 4 fließt, nicht begrenzt wird. Der Leistungsschalter 22 des Wireless Adapters 8 wird derart angesteuert, dass ausschließlich die zweite Adapter-Netzteilstufe 20 mit der Feldbus-Kommunikationsschnittstelle 4 in Verbindung steht. Die erste Adapter-Netzteilstufe 18 ist dabei weiterhin an der Stromquelle 16 angeschlossen und dient zur Versorgung der Systemkomponenten des Adapters 8. Ferner wird der Leistungsschalter 38 des Feldgerätes 2 derart angesteuert, dass sowohl die erste 34 als auch die zweite 36 Feldgerät-Netzteilstufe mit der Feldbus-Kommunikationsschnittstelle 4 verbunden sind. Zusätzlich wird der Schalter 46 geschlossen, so dass der Messwertaufnehmer 28 über die zweite Feldgerät-Netzteilstufe 36 und über die zweite Adapter-Netzteilstufe 20 mit elektrischer Leistung versorgt wird. Diese Schaltstellung ist in Fig. 2B dargestellt. Der über die Feldbus-Kommunikationsschnittstelle 4 fließende Strom kann wiederum je nach Leistungsbedarf variieren. In dem leistungsangepassten Modus für einen hohen Leistungsbedarf kann der von dem Messwertaufnehmer 28 benötigte hohe Leistungsbedarf durch die beiden zweiten Netzteilstufen 20 und 36 effektiv auf die Stromquelle 16 angepasst werden, wodurch Energie eingespart wird. In der ersten Feldgerät-Netzteilstufe 34 muss in diesem Schaltzustand die Spannung auf einen Wert (hier 3V) transformiert werden, der von den von der ersten Feldgerät-Netzteilstufe 34 versorgten Systemkomponenten 30, 32 benötigt wird. Ein in dem Feldgerät 2 bestimmter Messwert wird auch in dem leistungsangepassten Modus mit einem hohen Leistungsbedarf nicht über den absoluten Stromwert des Stromsignals sondern durch eine Überlagerung von digitalen Kommunikationssignalen über das Stromsignal entsprechend dem HART®-Standard (FSK-Verfahren) an den Wireless Adapter 8 kommuniziert. Nach Erhalt des Messwertes kann der Wireless Adapter 8 das Feldgerät 2 wiederum auffordern, in den oberhalb beschriebenen, leistungsangepassten Modus mit niedrigem Leistungsbedarf zu wechseln. Dadurch wird in den Zeiten, in denen kein Messwert aufgenommen werden muss, nicht unnötig Energie verbraucht.

Neben den beiden oberhalb beschriebenen leistungsangepassten Modi ist auch die Realisierung eines Standard-HART®-Modus möglich. Die Anforderung des Standard-HART®-Modus kann wiederum über speziell hierfür spezifizierte HART®-Kommandos erfolgen. In dem Standard-HART®-Modus wird ein Schaltzustand, wie er in Fig. 2B dargestellt ist und oberhalb beschrieben wird, eingenommen. Zusätzlich wird die Stromsenke 44 über den D/A-Wandler 40 von der Steuereinheit 30 derart angesteuert, dass der Stromwert, der über die Feldbus-Kommunikationsschnittstelle 4 fließt, auf einen Wert zwischen 4 mA und 20 mA eingestellt wird und der jeweils dann, wenn ein Messwert übertragen wird, dem jeweils erfassten Messwert entspricht. Ferner werden die beiden zweiten Netzteilstufen 20 und 36 des Wireless Adapters 8 und des Feldgerätes 2 derart angesteuert, dass der Spannungswert im Bereich der Feldbus-Kommunikationsschnittstelle 4 ausreichend hoch ist, so dass auch bei einem minimalen Stromwert von 4 mA eine ausreichende Versorgung des Feldgerätes 2 gewährleistet wird.

Im Folgenden wird unter Bezugnahme auf die Figuren 3A und 3B eine zweite Ausführungsform der vorliegenden Erfindung erläutert. Dabei werden gleiche Bauteile mit den gleichen Bezugszeichen bezeichnet. Im Folgenden wird lediglich auf die Unterschiede gegenüber der ersten Ausführungsform eingegangen.

In Fig. 3A ist wiederum ein Schaltzustand für einen leistungsangepassten Modus mit niedrigem Leistungsbedarf dargestellt, während in Fig. 3B ein Schaltzustand für einen leistungsangepassten Modus mit hohem Leistungsbedarf dargestellt ist. Im Unterschied zu der ersten Ausführungsform verbindet der Leistungsschalter 38' des Feldgerätes 2' in dem leistungsangepassten Modus mit hohem Leistungsbedarf ausschließlich die zweite Feldgerät-Netzteilstufe 36 mit der Feldbus-Kommunikationsschnittstelle 4. Die erste Feldgerät-Netzteilstufe 34 wird in dem leistungsangepassten Modus mit hohem Leistungsbedarf von der zweiten Feldgerät-Netzteilstufe 36 mit elektrischer Leistung versorgt, wie in den Fig. 3A und 3B durch die Linie 48 dargestellt ist. Demgemäß ist in dieser zweiten Ausführungsform der vierte Leistungsbereich der zweiten Feldgerät-Netzteilstufe 36 derart ausgelegt, dass nicht nur der Messwertaufnehmer 28 sondern auch die erste Feldgerät-Netzteilstufe 34 von der zweiten Feldgerät-Netzteilstufe 36 mit elektrischer Leistung versorgbar ist.

Die vorliegende Erfindung ist nicht auf die in den Figuren dargestellten Ausführungsbeispiele beschränkt. Beispielsweise können sowohl in dem Feldgerät als auch in dem Wireless Adapter mehr als nur zwei Netzteilstufen vorgesehen sein. Diese können entweder zur Realisierung eines weiteren leistungsangepassten Modus ausgelegt sein und dementsprechend über einen entsprechenden Leistungsschalter mit der Feldbus-Kommunikationsschnittstelle des Feldgerätes verbindbar sein. Ferner können sie auch dauerhaft an einer Stromversorgung angeschlossen sein und lediglich dazu dienen, eine für eine bestimmte Systemkomponente benötigte Spannung separat bereitzustellen. Auch die Art der Verbindung zwischen dem Feldgerät und dem Wireless Adapter ist unerheblich für die vorliegende Erfindung, sofern sie eine Kommunikation als auch eine Stromversorgung ermöglicht. Beispielsweise können die Schnittstelle des Wireless Adapters und die Feldbus-Kommunikationsschnittstelle des Feldgerätes auch ohne eine dazwischen liegende Kabelverbindung direkt aneinander angeschlossen sein. Ferner sind die in den Ausführungsbeispielen angegebenen Spannungswerte der einzelnen Systemkomponenten und der einzelnen Netzteilstufen nur beispielhaft. Je nach Realisierung der Schaltung kann beispielsweise auch in der ersten und/oder zweiten Feldgerät-Netzteilstufe stets eine Spannungstransformation durchgeführt werden.

## Patentansprüche

1. Verfahren zum Betreiben eines Feldgerätes (2; 2') der
Prozessautomatisierungstechnik mit einer Feldbus-Kommunikationsschnittstelle (4), an der ein Wireless Adapter (8) angeschlossen ist, wobei das Feldgerät (2; 2') von dem Wireless Adapter (8) über die Feldbus-Kommunikationsschnittstelle (4) mit elektrischer Leistung versorgt wird, wobei die Kommunikation über die Feldbus-Kommunikationsschnittstelle (4) gemäß dem HART®-Standard erfolgt **dadurch gekennzeichnet,**
**dass** das Feldgerät in einen leistungsangepassten Modus umgeschaltet wird, wobei in diesem Modus Daten, insbesondere zu übertragende Messwerte, ausschließlich durch ein einem Stromsignal überlagertes digitales Kommunikationssignal kommuniziert werden und der Absolutwert des Stromsignals nicht mehr eingestellt, sondern durch den jeweiligen Leistungsbedarf bestimmt wird,
so dass ein über die Feldbus-Kommunikationsschnittstelle (4) fließender Strom auch unter dem minimalen Stromwert von 4 mA oder höher als der maximale Stromwert von 20 mA des HART-Standards liegen kann.

2. Verfahren gemäß dem vorangehenden Anspruch, **dadurch gekennzeichnet, dass** mindestens eine Systemkomponente des Feldgerätes (2; 2') und/oder des Wireless Adapters (8), insbesondere ein Messwertaufnehmer (28) des Feldgerätes, während eines Zeitraumes, in dem diese Systemkomponente nicht benötigt wird, von der Leistungsversorgung getrennt wird.

3. Verfahren gemäß einem der vorangehenden Ansprüche, **dadurch gekennzeichnet, dass** der Wireless Adapter (8) eine erste Adapter-Netzteilstufe (18), die für einen ersten Leistungsbereich ausgelegt ist, und mindestens eine zweite Adapter-Netzteilstufe (20), die für einen zweiten Leistungsbereich ausgelegt ist, aufweist, wobei der zweite Leistungsbereich höher als der erste Leistungsbereich ist.

4. Verfahren gemäß einem der vorangehenden Ansprüche, **dadurch gekennzeichnet, dass** das Feldgerät (2; 2') eine erste Feldgerät-Netzteilstufe (34), die für einen dritten Leistungsbereich ausgelegt ist, und mindestens eine zweite Feldgerät-Netzteilstufe (36), die für einen vierten Leistungsbereich ausgelegt ist, aufweist, wobei der vierte Leistungsbereich höher als der dritte Leistungsbereich ist und wobei über die Feldbus-Kommunikationsschnittstelle (4) vorzugsweise jeweils die ersten Netzteilstufen (18, 34) des Wireless Adapters (8) und des Feldgerätes (2; 2') miteinander oder jeweils die zweiten Netzteilstufen (20, 36) des Wireless Adapters (8) und des Feldgerätes (2; 2') miteinander verbunden werden.

5. Verfahren gemäß Anspruch 4, **dadurch gekennzeichnet, dass** durch die erste Adapter-Netzteilstufe (18) zumindest Systemkomponenten des Adapters (8), die einen niedrigen Leistungsbedarf aufweisen, insbesondere eine Steuereinheit (10), eine Schaltung (26), durch die eine Kommunikation mit dem Feldgerät (2; 2') realisiert wird und/oder eine Funkeinheit (12), mit elektrischer Leistung versorgt werden und/oder
dass durch die erste Feldgerät-Netzteilstufe (34) zumindest Systemkomponenten des Feldgerätes (2; 2'), die einen niedrigen Leistungsbedarf aufweisen, insbesondere eine Steuereinheit (30) und/oder eine Schaltung (32), durch die eine Kommunikation mit dem Wireless Adapter (8) realisiert wird, versorgt werden.

6. Verfahren gemäß Anspruch 4 oder 5, **dadurch gekennzeichnet, dass** dann, wenn die zweiten Netzteilstufen (20, 36) des Feldgerätes (2; 2') und des Wireless Adapters (8) über die Feldbus-Kommunikationsschnittstelle (4) miteinander verbunden sind, zusätzlich auch die erste Adapter-Netzteilstufe (18) mit einer Stromquelle (16) des Adapters (8) und/oder die erste Feldgerät-Netzteilstufe (34) mit der Feldbus-Kommunikationsschnittstelle (4) verbunden sind.

7. Verfahren gemäß einem der Ansprüche 4 bis 6, **dadurch gekennzeichnet, dass** dann, wenn die zweiten Netzteilstufen (36, 20) des Feldgerätes (2') und des Wireless Adapters (8) über die Feldbus-Kommunikationsschnittstelle (4) miteinander verbunden sind, die erste Adapter-Netzteilstufe (18) von der zweiten Adapter-Netzteilstufe (20) und/oder die erste Feldgerät-Netzteilstufe (34) von der zweiten Feldgerät-Netzteilstufe (36) mit elektrischer Leistung versorgt wird/werden.

8. Verfahren gemäß einem der vorangehenden Ansprüche, **dadurch gekennzeichnet, dass** das Feldgerät (2; 2') und der Wireless Adapter (8) alternativ auch in einem Standard-Modus betreibbar sind, in dem der über die Feldbus-Kommunikationsschnittstelle (4) fließende Strom auf einen vorgegebenen Wert, insbesondere auf einen über die Feldbus-Kommunikationsschnittstelle (4) gemäß dem HART®-Standard analog zu übertragenden Messwert, eingestellt wird, wobei die Stromeinstellung vorzugsweise durch eine entsprechende Stromeinstellungsschaltung (40, 44) in dem Feldgerät (2; 2') realisiert wird.

9. Verfahren gemäß einem der Ansprüche 3 bis 8, **dadurch gekennzeichnet, dass** über die Feldbus-Kommunikationsschnittstelle (4) zwischen dem Wireless Adapter (8) und dem Feldgerät (2; 2') durch entsprechend spezifizierte Kommandos, insbesondere durch entsprechend spezifizierte HART®-Kommandos, kommuniziert wird, in welchem Modus das Feldgerät (2; 2') und der Wireless Adapter (8) zu betreiben sind.

10. Verfahren gemäß Anspruch 9, **dadurch gekennzeichnet, dass** eine Umschaltung zwischen den jeweiligen Modi durch eine in dem Feldgerät (2; 2') vorgesehene Steuereinheit (30) und/oder durch eine in dem Wireless Adapter (8) vorgesehe Steuereinheit (10) erfolgt, wobei die Umschaltung vorzugsweise in Abhängigkeit davon erfolgt, ob durch das Feldgerät (2; 2') im betreffenden Zeitpunkt ein Messwert aufgenommen oder eine Aktion ausgeführt wird, oder ob das Feldgerät (2; 2') in dem betreffenden Zeitpunkt in einem Standby-Betrieb ist.

11. Funksystem, aufweisend ein Feldgerät der Prozessautomatisierungstechnik mit einer Feldbus-Kommunikationsschnittstelle (4) und einer Stromeinstellungsschaltung (40, 44), und einen Wireless Adapter (8), der an der Feldbus-Kommunikationsschnittstelle (4) des Feldgerätes (2; 2') angeschlossen ist und der eine Stromquelle (16) zur Versorgung der Systemkomponenten des Wireless Adapters (8) und des Feldgerätes (2; 2') mit elektrischer Leistung, mindestens eine Netzteilstufe (18, 20) und eine Funkeinheit (12) umfasst, wobei durch die Stromeinstellungsschaltung (40, 44) ein über die Feldbus-Kommunikationsschnittstelle (4) fließender Strom auf einen vorgegebenen Wert, auf einen über die Feldbus-Kommunikationsschnittstelle (4) gemäß dem HART®-Standard analog zu übertragenden Messwert, einstellbar ist, **dadurch gekennzeichnet,**
**dass** das Feldgerät in einen leistungsangepassten Modus umschaltbar ist, wobei in diesem Modus Daten ausschließlich durch ein einem Stromsignal überlagertes digitales Kommunikationssignal kommunizierbar sind und der Absolutwert des Stromsignals nicht mehr eingestellt, sondern durch den jeweiligen Leistungsbedarf bestimmt wird, so dass ein über die Feldbus-Kommunikationsschnittstelle (4) fließender Strom auch unter dem minimalen Stromwert von 4 mA oder höher als der maximale Stromwert von 20 mA des HART-Standards liegen kann.

12. Funksystem gemäß Anspruch 11, **dadurch gekennzeichnet, dass** das Feldgerät eine erste Feldgerät-Netzteilstufe (34), die für einen dritten Leistungsbereich ausgelegt ist, und mindestens eine zweite Netzteilstufe (36), die für einen vierten Leistungsbereich, der höher als der dritte Leistungsbereich ist, aufweist, wobei die erste (34) und die zweite (36) Feldgerät-Netzteilstufe jeweils mit der Feldbus-Kommunikationsschnittstelle (4) verbindbar sind.

13. Funksystem gemäß Anspruch 12, **dadurch gekennzeichnet, dass** das Feldgerät eine Steuereinheit (30) und einen von der Steuereinheit (30) angesteuerten Leistungsschalter (38; 38') aufweist, wobei die erste (34) und die zweite (36) Feldgerät-Netzteilstufe jeweils durch den Leistungsschalter (38; 38') mit der Feldbus-Kommunikationsschnittstelle (4) verbindbar sind.

## Claims

1. Procedure for operating a field device (2, 2') used in process automation technology with a fieldbus communication interface (4) to which a wireless adapter (8) is connected, wherein electrical power is supplied to the field device (2, 2') by the wireless adapter (8) via the fieldbus communication interface (4), wherein communication via the fieldbus communication interface (4) is according to the HART® standard,
**characterized in that**
the field device is switched to a power-adapted mode, wherein, in said mode, data - particularly measured values to be transmitted - are exclusively communicated by a digital communication signal superimposed on a current signal, and the absolute value of the current signal is no longer set but instead is determined by the respective power requirements,
such that a current flowing via the fieldbus communication interface (4) can also be below the minimum current value of 4 mA, or higher than the maximum current value of 20 mA, of the HART standard.

2. Procedure as claimed in the previous claim, **characterized in that** at least one system component of the field device (2, 2') and/or of the wireless adapter (8), particularly a measured value sensor (28) of the field device, is disconnected from the power supply during a period in which this system component is not required.

3. Procedure as claimed in one of the previous claims, **characterized in that** the wireless adapter (8) has a first adapter power unit stage (18),which is designed for a first power range, and at least a second adapter power unit stage (20), which is designed for a second power range, wherein the second power range is higher than the first power range.

4. Procedure as claimed in one of the previous claims, **characterized in that** the field device (2, 2') has a first field device power unit stage (34), which is designed for a third power range, and at least a second field device power unit stage (36), which is designed for a fourth power unit stage, wherein the fourth power range is higher than the third power range and wherein, preferably the first power unit stages (18, 34) of the wireless adapter (8) and the field device (2, 2'), respectively, are interconnected, or the second power unit stages (20, 36) of the wireless adapter (8) and of the field device (2; 2'), respectively, are interconnected via the fieldbus communication interface.

5. Procedure as claimed in Claim 4, **characterized in that** the first adapter power unit stage (18) provides electrical power to at least the system components of the adapter (8) that have a low power requirement, particularly a control unit (10), a circuit (26), via which communication takes place with the field device (2, 2'), and/or a radio unit (12), and/or
**in that** power is provided by the first field device power unit stage (34) at least to system components of the field device (2, 2') that have a low power requirement, particularly a control unit (30) and/or a circuit (32), via which communication takes place with the wireless adapter (8).

6. Procedure as claimed in Claim 4 or 5, **characterized in that** when the second power unit stages (20, 36) of the field device (2, 2') and of the wireless adapter (8) are interconnected via the fieldbus communication interface (4), the first adapter power unit stage (18) is also connected to a current source (16) of the adapter (8) and/or the first field device power unit stage (34) is also connected to the fieldbus communication interface (4).

7. Procedure as claimed in one of the Claims 4 to 6, **characterized in that** when the second power unit stages (20, 36) of the field device (2') and of the wireless adapter (8) are interconnected via the fieldbus communication interface (4), the first adapter power unit stage (18) is supplied with electrical power by the second adapter power unit stage (20) and/or the first field device power unit stage (34) is supplied with electrical power by the second field device power unit stage (36).

8. Procedure as claimed in one of the previous claims, **characterized in that** the field device (2, 2') and the wireless adapter (8) can alternatively also be operated in a standard mode in which the current flowing via the fieldbus communication interface (4) is set to a predefined value, particularly to a measured value to be transmitted via the fieldbus interface (4) according to the HART® standard, wherein the current setting is made preferably by a corresponding current regulation circuit (40, 44) integrated into the field device (2, 2').

9. Procedure as claimed in one of the Claims 3 to 8, **characterized in that** appropriately specified commands, particularly appropriately specified HART® commands, are used for communication between the wireless adapter (8) and the field device (2, 2') via the fieldbus communication interface (4), said communication indicating the mode in which the field device (2, 2') and the wireless adapter (8) are to be operated.

10. Procedure as claimed in Claim 9, **characterized in that** a control unit (30) provided in the field device (2, 2') and/or a control unit (10) provided in the wireless adapter (8) switches between the individual modes, wherein the switchover preferably takes place depending on whether the field device (2, 2') is recording a measured value or executing an action at that particular point in time, or on whether the field device (2, 2') is in a standby mode at the particular point in time.

11. Radio system, featuring a process automation technology field device with a fieldbus communication interface (4) and a current regulation circuit (40, 44), and a wireless adapter (8), which is connected to the fieldbus communication interface (4) of the field device (2, 2') and which comprises a current source (16) for the supply of electrical energy to the system components of the wireless adapter (8) and of the field device (2, 2'), at least one power unit stage (18, 20) and a radio unit (12), wherein a current flowing via the fieldbus communication interface (4) can be regulated by the current regulation circuit (40, 44) to a predefined value, to a measured value to be transmitted via the fieldbus communication interface (4) according to the HART® standard, **characterized in that** the field device can be switched to a power-adapted mode, wherein in this mode data can only be communicated via a digital communication signal superimposed on a current signal and the absolute value of the current signal is no longer set but is instead determined by the individual power requirement, such that a current flowing via the fieldbus communication interface (4) can also be below the minimum current value of 4 mA, or higher than the maximum current value of 20 mA, of the HART standard.

12. Radio system as claimed in Claim 11, **characterized in that** the field device has a first field device power unit stage (34), which is designed for a third power range, and at least a second power unit stage (36), which is designed for a fourth power range, which is higher than the third power range, wherein the first (34) and the second (36) field device power unit stage can each be connected to the fieldbus communication interface (4).

13. Radio system as claimed in Claim 12, **characterized in that** the field device has a control unit (30) and a power switch (38, 38') controlled by the control unit (30), wherein the first (34) and the second (36) field device power unit stage can each be connected to the fieldbus communication interface (4) via the power switch (38, 38').

## Revendications

1. Procédé destiné à l'exploitation d'un appareil de terrain (2, 2') de la technique d'automatisation des process avec une interface de communication de bus de terrain (4), à laquelle est raccordée un adaptateur sans fil (8), l'appareil de terrain (2, 2') étant alimenté en énergie électrique par l'adaptateur sans fil (8) par l'intermédiaire de l'interface de communication de bus de terrain (4), la communication s'effectuant par l'intermédiaire de l'interface de communication de bus de terrain (4) selon le standard HART®,
**caractérisé**
**en ce que** l'appareil de terrain est commuté en mode adaptation de puissance ; dans ce mode, les données, notamment les valeurs mesurées à transmettre, sont communiquées exclusivement par un signal de communication numérique superposé au signal de courant et la valeur absolue du signal de courant n'est plus réglée, mais déterminée par le besoin de puissance respectif,
si bien qu'un courant circulant à travers l'interface de communication de bus de terrain (4) peut également être inférieur à la valeur de courant minimale de 4 mA ou supérieur à la valeur de courant maximale de 20 mA du standard HART.

2. Procédé selon la revendication précédente, **caractérisé en ce qu'**au moins un composant système de l'appareil de terrain (2, 2') et/ou de l'adaptateur sans fil (8), notamment un capteur de mesure (28) de l'appareil de terrain, pendant une période au cours de laquelle ce composant système n'est pas utilisé, est déconnecté de l'alimentation en énergie.

3. Procédé selon l'une des revendications précédentes, **caractérisé en ce que** l'adaptateur sans fil (8) comporte un premier étage d'alimentation d'adaptateur (18), qui est conçu pour une première plage de puissance, et au moins un deuxième étage d'alimentation d'adaptateur (20), qui est conçu pour une deuxième plage de puissance, la deuxième plage de puissance étant supérieure à la première plage de puissance.

4. Procédé selon l'une des revendications précédentes, **caractérisé en ce que** l'appareil de terrain (2, 2') comporte un premier étage d'alimentation d'appareil de terrain (34), qui est conçu pour une troisième plage de puissance, et au moins un deuxième étage d'alimentation d'appareil de terrain (36), qui est conçu pour une quatrième plage de puissance, la quatrième plage de puissance étant supérieure à la troisième plage de puissance, et procédé pour lequel, de préférence, les premiers étages d'alimentation (18, 34) respectivement de l'adaptateur sans fil (8) et de l'appareil de terrain (2, 2') sont reliés entre eux ou les deuxièmes étages d'alimentation (20, 36) respectivement de l'adaptateur sans fil (8) et de l'appareil de terrain (2, 2') sont reliés entre eux par l'intermédiaire de l'interface de communication de bus de terrain.

5. Procédé selon la revendication 4, **caractérisé en ce que** sont alimentés en énergie électrique, par l'intermédiaire du premier étage d'alimentation d'adaptateur (18), au moins des composants système de l'adaptateur (8) présentant un faible besoin de puissance, notamment une unité de commande (10), un circuit (26), à travers lequel est réalisée une communication avec l'appareil de terrain (2, 2'), et/ou une unité radio (12), et/ou en ce que sont alimentés en énergie électrique, par l'intermédiaire du premier étage d'alimentation d'appareil de terrain (34), au moins des composants système de l'appareil de terrain (2, 2') présentant un faible besoin de puissance, notamment une unité de commande (30) et/ou un circuit (32), à travers lequel est réalisée une communication avec l'adaptateur sans fil (8).

6. Procédé selon la revendication 4 ou 5, **caractérisé en ce que**, lorsque les deuxièmes étages d'alimentation (20, 36) de l'appareil de terrain (2, 2') et de l'adaptateur sans fil (8) sont reliés entre eux par l'intermédiaire de l'interface de communication de bus de terrain (4), le premier étage d'alimentation d'adaptateur (18) est également relié avec une source de courant (16) de l'adaptateur (8) et/ou le premier étage d'alimentation d'appareil de terrain (34) est également relié avec l'interface de communication de bus de terrain (4).

7. Procédé selon l'une des revendications 4 à 6, **caractérisé en ce que** lorsque les deuxièmes étages d'alimentation (36, 20) de l'appareil de terrain (2') et de l'adaptateur sans fil (8) sont reliés entre eux par l'intermédiaire de l'interface de communication de bus de terrain (4), le premier étage d'alimentation d'adaptateur (18) est alimenté en énergie électrique par le deuxième étage d'alimentation d'adaptateur (20) et/ou le premier étage d'alimentation d'appareil de terrain (34) est alimenté en énergie électrique par le deuxième étage d'alimentation d'appareil de terrain (36).

8. Procédé selon l'une des revendications précédentes, **caractérisé en ce que** l'appareil de terrain (2, 2') et l'adaptateur sans fil (8) peuvent être utilisés alternativement également dans un mode standard, dans lequel le courant circulant à travers l'interface de communication de bus de terrain (4) est réglé à une valeur prédéfinie, notamment à la valeur mesurée à transmettre selon le standard HART® par l'intermédiaire de l'interface de communication de bus de terrain (4), le réglage du courant étant réalisé de préférence par un circuit de réglage de courant (40, 44) correspondant, intégré dans l'appareil de terrain (2, 2').

9. Procédé selon l'une des revendications 3 à 8, **caractérisé en ce que** s'effectue, par l'intermédiaire de l'interface de communication de bus de terrain (4), une communication entre l'adaptateur sans fil (8) et l'appareil de terrain (2, 2') au moyen de commandes spécifiées de façon appropriée, notamment au moyen de commandes HART® spécifiées de façon appropriée, laquelle communication indique dans quel mode l'appareil de terrain (2, 2') et l'adaptateur sans fil (8) doivent être utilisés.

10. Procédé selon la revendication 9, **caractérisé en ce qu'**intervient une commutation entre les modes respectifs par une unité de commande (30) prévue dans l'appareil de terrain (2, 2') et/ou par une unité de commande (10) prévue dans l'adaptateur sans fil (8), la commutation s'effectuant de préférence selon qu'une valeur mesurée est enregistrée ou selon qu'une action est exécutée au moment déterminé par l'appareil de terrain (2, 2'), ou selon que l'appareil de terrain (2, 2') est en mode veille au moment déterminé.

11. Système radio, comportant un appareil de terrain de la technique d'automatisation des process avec une interface de communication de bus de terrain (4) et un circuit de réglage de courant (40, 44), ainsi qu'un adaptateur sans fil (8) qui est raccordé à l'interface de communication de bus de terrain (4) de l'appareil de terrain (2, 2') et qui comprend une source de courant (16) pour l'alimentation en énergie électrique des composants système de l'adaptateur sans fil (8) et de l'appareil de terrain (2, 2'), au moins un étage d'alimentation (18, 20) et une unité radio (12), un courant circulant à travers l'interface de communication de bus de terrain (4) pouvant être réglé par le circuit de réglage de courant (40, 44) à une valeur prédéfinie, à la valeur mesurée à transmettre selon le standard HART® par l'intermédiaire de l'interface de communication de bus de terrain (4), **caractérisé en ce que** l'appareil de terrain peut être commuté dans un mode adaptation de puissance ; dans ce mode, les données peuvent être communiquées exclusivement par un signal de communication numérique superposé au signal de courant et la valeur absolue du signal de courant n'est plus réglée, mais déterminée par le besoin de puissance respectif, si bien qu'un courant circulant à travers l'interface de communication de bus de terrain (4) peut également être inférieur à la valeur de courant minimale de 4 mA ou supérieur à la valeur de courant maximale de 20 mA du standard HART.

12. Système radio selon la revendication 11, **caractérisé en ce que** l'appareil de terrain comporte un premier étage d'alimentation d'appareil de terrain (34), conçu pour une troisième plage de puissance, et au moins un deuxième étage d'alimentation (36), conçu pour une quatrième plage de puissance, qui est supérieure à la troisième plage de puissance, le premier (34) et le deuxième (36) étage d'alimentation d'appareil de terrain pouvant être chacun relié avec l'interface de communication de bus de terrain (4).

13. Système radio selon la revendication 12, **caractérisé en ce que** l'appareil de terrain comporte une unité de commande (30) et un interrupteur de puissance (38, 38') commandé par l'unité de commande (30), le premier (34) et le deuxième (36) étage d'alimentation d'appareil de terrain pouvant être chacun relié avec l'interface de communication de bus de terrain (4) par le biais de l'interrupteur de puissance (38, 38').
